# EUROPEAN PATENT APPLICATION

(11) **EP 4 219 608 A1**
(43) Date of publication of application: **02.08.2023**
(21) Application number: 23164789.2
(22) Date of filing: 21.09.2018
(51) Int. Cl.: C08J 9/00, C08J 9/16, C08J 9/20, C08K 3/04

(54) **VINYL AROMATIC POLYMER GRANULATE AND FOAM CONTAINING TREATED PARTICLES OF ANTHRACITE AS AN ATHERMANOUS ADDITIVE AND PROCESS FOR THE PRODUCTION THEREOF**

(30) Priority: 22.09.2017 EP 17461611
(62) Divisional of application: 18769390.8
(71) Applicant: Synthos Dwory 7 spolka z ograniczona odpowiedzialnoscia, 32-600 Oswiecim (PL)
(72) Inventor: Kondratowicz, Filip Lukasz, 32-600 OSWIECIM (PL)
(74) Representative: Eisenführ Speiser

(57) **Abstract**

The invention relates to a process for preparing a masterbatch of treated particles of calcined anthracite, and a masterbatch. Furthermore, the invention relates to the use of treated particles of calcined anthracite in the production of vinyl aromatic polymer granulate and foam. Treatment according to the invention is performed with one or more agents selected from silanes and siloxanes, the silane or siloxane having 1) one or more C₁- to C₃-alkoxy groups and 2) one or more C₁- to C₃₀-alkyl groups.

## Description

The present invention relates to the use of treated particles of calcined anthracite in the production of vinyl aromatic polymer foams, which treatment improves the particle's dispersion in a vinyl aromatic polymer matrix, and a process to prepare a corresponding masterbatch. It further relates to expandable vinyl aromatic polymer granulate comprising treated particles of calcined anthracite as an athermanous additive, in a high amount of calcined anthracite. Moreover, it relates to processes for the production of expandable vinyl aromatic polymer granulate, in the presence of treated particles of calcined anthracite. Moreover, it relates to vinyl polymer foam comprising the treated particles of calcined anthracite.

Vinyl aromatic polymers are known and are used for the preparation of expanded products that are adopted in various applications, of which the most important one is for thermal insulation. This is why there is a continuously increasing demand for expanded vinyl aromatic polymers with a low thermal conductivity coefficient (lambda, mW/m·K).

It is generally known that the addition of athermanous additives from the group of heat absorbers (e.g. carbon black), heat scatterers (e.g. minerals from the group of silicas and titanium oxides) and heat reflectors (e.g. aluminium pigment and graphite) decreases the thermal conductivity coefficient of polymeric foams. Examples for such types of polymeric foams are those obtained by suspension polymerization of vinyl aromatic monomers (in particular of styrene) and optionally comonomers. Other examples for such type of polymeric foams are those obtained by the extrusion of general purpose polystyrene or its copolymers.

Typically, the addition of a combination of athermanous additives that can scatter (and therefore prolong the IR rays' pathway) and absorb heat radiation results in a significant reduction of the value of the thermal conductivity coefficient. However, the most pronounced effect results from the addition of IR reflectors. A combination of IR scatterers and IR reflectors can influence the reduction of the concentration of typical IR absorbers (such as carbon black) and leads to an improvement of the self-extinguishing effect of polystyrene foams. See e.g. WO2015/097106A1 (teaching a combination of carbon black and silica as athermanous additive) as well WO 2016/113332 A1 (disclosing a favourable and specific combination of graphite and silica).

Main disadvantages of the use of carbon black in expandable vinyl aromatic polymers are a high loading that is required to obtain a sufficiently competitive 'lambda', such as 6 to 8 wt.%, and a high concentration of brominated flame retardant of above 1 wt.% that is necessary to meet flame retardancy requirements. Other problems associated with the use of carbon black are a weak dimensional stability of the moulded foams, foam board deformation during cutting, and finally burning of hot wires. In some applications, the dark grey or black colour of the final insulation board is also a disadvantage, for instance for convertors when such material is used as recyclate additive for graphite-based EPS, as it gives a non-uniform colour of the final insulation board.

When, instead of carbon black, graphite is used, in an amount of typically 4 to 6 wt.%, some of the problems associated with the use of carbon black are overcome. However, a relatively high loading of brominated flame retardant of 0.7 to 1.2 wt.% is still necessary. Such flame retardants are expensive and sensitive for degradation (especially when a polymeric brominated SBS rubber such as Emerald 3000 is used). Other brominated flame retardants, especially hexabromocyclododecane (HBCD), are recognized as pollutants and are prohibited from being used in expandable polystyrene.

Another disadvantage of carbon black and, even more so, of graphite, is the cost of such athermanous additives. Presently, highly pure graphites, having a carbon content above 99% (as required for a good stability of the suspension polymerization process), cost in the range of 1.8 to 2.5 EUR/kg, while most carbon blacks cost above 1.5 EUR/kg.

Whilst it is technologically and economically justified to search for alternative carbonaceous athermanous additives for vinyl aromatic polymers to be used for the production of expandable insulation foams, the addition of particles of different types of carbon requires the development of new products and production processes.

Anthracite is a potentially interesting carbon ingredient. It is a natural carbon-based material and the most metamorphosed type of coal (but still shows low-grade metamorphism), in which the carbon content is often as low as 92 to 98 wt.%. Typically, it has a high content of mineral ash, sulphur and organic volatiles. To make it useful as additive in expandable polystyrene foams as infrared adsorbing additive, it first has to be calcined, to remove volatiles which would otherwise cause a low level of self-extinguishing as well as process problems. Such a form of calcined anthracite with higher density is then pulverized to micron size, especially below an average particle size of 10 pm, to interfere well with near-infrared and some part of mid-infrared radiation, having a wave-length of 0.8 to 10 µm. The typical price of calcined anthracite is below 500 EUR/t.

The use of anthracite as athermanous additive is taught in DE 20 2010 013 850 U1, which mentions additive particles that are characterized as partially graphitic and partially having turbostratic order. Turbostratic order describes a crystal structure in which the basal planes have slipped out of alignment. Such carbon-based materials can be characterized by the distances of their graphene layers. An ideal graphitic structure has a honeycomb lattice, with separation of 0.142 nm, and the distance between the layers is 0.335 nm.

According to DE 20 2010 013 850 U1, anthracite is a naturally-occurring example of such a structure with both graphitic and turbostratic areas. It has a very narrow peak at 18.7 nm (determined by small-angle X-ray scattering, SAXS, wavelength λ = 0.1542 nm, CuK_{α} with a rotating anode), corresponding to a layer spacing of 0.335 nm and a wide range of turbostratic layer arrangements, partly overlaid by signals from mineral impurities. Depending on the starting material for calcination (which could be green anthracite, semianthracite, anthracite or meta-anthracite), anthracite with non-graphitic structure could be obtained. Non-graphitic carbons have an average layer spacing of >0.344 nm.

According to US2015/0337101 A1, thermal treatment of green anthracite in a temperature range of from 500°C to 2200°C leads to the production of non-graphitic anthracite coke. Also, it is described that a platelet form of particles is advantageously used in expandable polystyrene, characterized by a so-called aspect ratio, D/T (circle diameter of the particle, D, to its thickness, T). The ratio D/T is said to be advantageously in a range of from 20 to 100. The publication also mentions the use of brominated or non-brominated flame retardants, in particular brominated organic compounds. However, US2015/0337101 A1 does not teach how the platelet form of particles is to be obtained.

The examples of US2015/0337101 A1 mention combinations of particles of gas calcined anthracite (GCA) with HBCD. However, the required amount of flame retardant is still relatively high. Moreover, when trying to obtain GCA having the particle sizes reported in US2015/0337101 A1 (4.0 pm, 3.5 pm, 3.0 µm) via jet milling, a prohibitively large energy input is required and excessive wear of the mills is observed, in particular when trying to obtain the smaller GCA particle sizes of 3.5 µm and 3.0 µm. Indeed, a more energy-efficient grinding process and a better dispersion in the polystyrene matrix, as compared to the use of graphite particles, cannot be obtained when trying to follow the teaching of US2015/0337101 A1. Also, when trying to repeat the exemplary processes of US2015/0337101 A1, the stated foams having low thermal conductivity cannot be obtained. Moreover, it was found that anthracite contents of 3.5 to 4.0 wt.% exemplified in US2015/0337101 A1 are not sufficient to reach a satisfactory thermal conductivity in the density range of 10 to 20 kg/m³, which density is typical for premium grades of expandable polystyrene foams containing 6 wt.% of well-dispersed pure graphite.

Accordingly, the incorporation of anthracite is difficult and serious problems with anthracite dispersion in the polystyrene matrix occur. In extrusion processes, where high shear forces are used, this problem is less pronounced, but anthracite particle dispersion and thermal conductivity are still insufficient.

Additionally, it was found that anthracite has poor cohesion to styrene and polystyrene. With a real density of about 1.8 g/cm³, it is a heavy material and, during suspension polymerization, anthracite dispersion in styrene forms sediment, which sediment is transferred to the water phase and finally into the water-styrene suspension system. These problems are mainly due to anthracite's high mineral content and its rather hydrophilic properties. With its ability to adsorb water, anthracite also causes serious instability of styrene in water suspension, when standard suspension stabilizers (such as polyvinyl alcohols, hydroxyethyl cellulose, polyvinyl pyrrolidone or micron-sized tricalcium phosphate particles) are used together with potassium persulfate, sodium dodecyl sulphate or alkyl benzene sulfonate.

Therefore, it was the object of the invention to provide an athermanous additive for vinyl aromatic foams that can be prepared from readily-available starting materials, that does not require a large energy input during preparation, and that requires a smaller amount of flame retardant to be used. This athermanous additive should be easy to process in typical processes for the production of vinyl aromatic foams and should at the same time provide the foams with excellent (low) thermal conductivity.

It has now surprisingly been found that this object is solved by the use of treated particles of calcined anthracite, when these particles are added in an amount of more than 10 wt.% of anthracite, based on polymer (inclusive of additives, but exclusive of propellant). This amount of particles of calcined anthracite is introduced in a suspension or extrusion process, and the required amount of flame retardant is surprisingly low. It was found that treatment of the particles of calcined anthracite with the agents in accordance with the invention reduces the particle's hydrophilic properties and makes them more hydrophobic and therefore miscible with vinyl aromatic polymer and monomer during polymerization. Treatment in accordance with the invention thus allows the high amount of anthracite to be well dispersed and is especially advantageous with grades of anthracite containing less than 98% of carbon. In contrast thereto, namely when using particles of calcined anthracite that have not been treated according to the invention, it is not possible to finalize the suspension process, because the suspension, even if stable at the beginning, will collapse after some time. It was found that this instability of a polymerization suspension is observed even if one uses a well-dispersed masterbatch of particles of calcined anthracite that have not been treated.

The treated particles of calcined anthracite are advantageously included as a masterbatch, during the production of the granulate. In extrusion processes according to the invention, the particles of calcined anthracite can be introduced as powder, so that silanization is performed *in situ.*

In an attempt to repeat the teachings of US2015/0337101 A1, it was found that the contents of anthracite claimed and exemplified in said document are not sufficient to reach, in the density range 10 to 20 kg/m³, a desired thermal conductivity which is similar to current commercial premium grades of expandable polystyrene foams containing well-dispersed pure graphite (up to 6 wt.%). Anthracite contains a graphitic structure with relatively poor order and with small crystallites, in comparison to calcined petroleum coke or pure graphite.

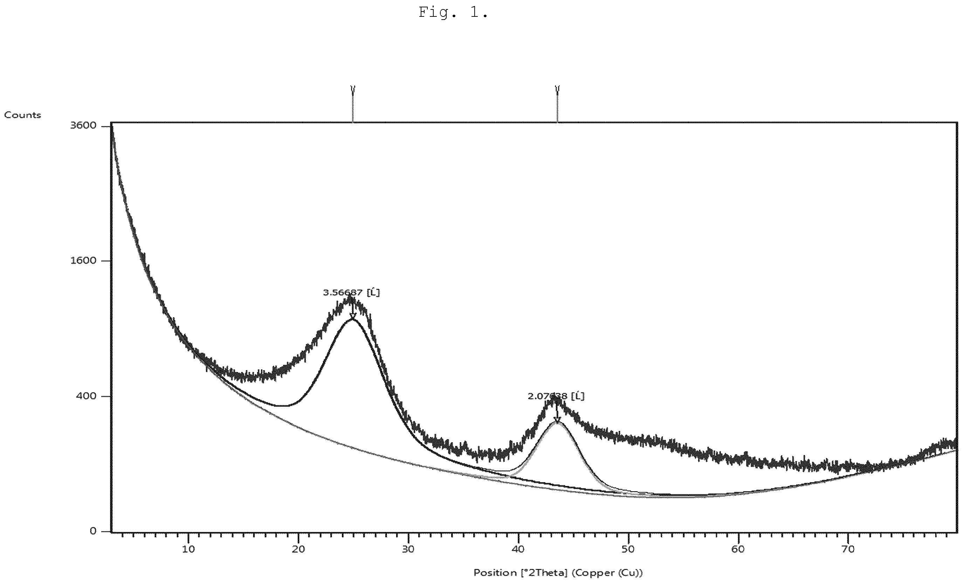

An X-ray diffractogram of gas calcined anthracite is presented in Fig. 1. The analysed distance between the graphene layers, d, was only about 0.357 nm, with crystallite size of about 21 Å (which is approximately 9 aromatic rings in a plane). This is considerably less as compared to the common anode grade of calcined petroleum coke:

| No. | Position (°2Θ) | d-spacing (Å) | h | k | l | Crystallite size L (Å) |
|---|---|---|---|---|---|---|
| 1 | 25.6 | 3.47186 (002) | 0 | 0 | 2 | 50.7 (002) |
| 2 | 43.6 | 2.07412 (010) | 0 | 1 | 0 | 13.5 (010) |

Anthracite is thus less suitable (as compared to graphite) to adsorb/reflect infrared energy to the extent claimed in US2015/0337101 A1. Also, the grinding of anthracite to a d50 size of less than 4 pm, as taught in US2015/0337101 A1, consumes far too much energy.

In contrast thereto, it was found in accordance with the present invention that calcined anthracite, in an amount of more than twice the amount exemplified in US2015/0337101 A1, results in thermal conductivity and density properties similar to current foam products based on graphite. Inclusion of such a large amount of anthracite is in particular possible in accordance with the present invention if the particles are 1) pre-treated with silane or siloxane and 2) initially intensively mixed with polymer. Treatment improves dispersion of the particles in extrusion and especially in suspension processes. Surprisingly, the use of the treated particles of calcined anthracite according to the invention is not associated with a significant deterioration of mechanical properties.

According to the present invention, particles of calcined anthracite are used in the production of vinyl aromatic polymer foam, for decreasing the thermal conductivity of the foam, as measured according to ISO 8301 AMD 1:2010-08. The particles have been treated with one or more agents selected from silanes and siloxanes, the silane or siloxane having 1) one or more C₁- to C₃-alkoxy groups and 2) one or more C₁- to C₃₀-alkyl groups. The foam comprises, based on the weight of the foam (including all additives), 10.1 to 25 wt% of the calcined anthracite, and the total amount of agent is in a range of from 0.1 to 10 wt.%, based on the weight of the calcined anthracite.

In one embodiment of the present invention, one or more silanes are used having 1) one or more C₁- to C₃-alkoxy groups and 2) one or more C₁- to C₃₀-alkyl groups. In another embodiment of the invention, one or more siloxanes are used having 1) one or more C₁- to C₃-alkoxy groups and 2) one or more C₁- to C₃₀-alkyl groups. Mixtures of one or more silanes and one or more siloxanes may also be used.

In a first aspect, the invention relates to the use of treated particles of calcined anthracite.

In a second aspect, the invention relates to a process for preparing a masterbatch of treated particles of calcined anthracite.

In a third aspect, the invention relates to the masterbatch of treated particles of calcined anthracite.

In a fourth aspect, the invention relates to a suspension process for the production of expandable vinyl aromatic polymer granulate.

In a fifth aspect, the invention relates to an extrusion process for the production of expandable vinyl aromatic polymer granulate.

In a sixth aspect, the invention relates to expandable vinyl aromatic polymer granulate.

In a seventh aspect, the invention relates to expanded vinyl aromatic polymer foam.

According to the first aspect, the invention relates to the use of particles of calcined anthracite, the particles having been treated with one or more agents selected from silanes and siloxanes, and the silane or siloxane having 1) one or more C₁- to C₃-alkoxy groups and 2) one or more C₁- to C₃₀-alkyl groups, in the production of vinyl aromatic polymer foam, for decreasing the thermal conductivity of the foam, as measured according to ISO 8301 AMD 1:2010-08. The foam comprises, based on the weight of the foam (including all additives), 10.1 to 25 wt% of the calcined anthracite. The total amount of agent is in a range of from 0.1 to 10 wt.%, based on the weight of the calcined anthracite.

Preferably, the particles of calcined anthracite have a d₅₀ particle size, as determined by laser diffraction (apparatus Fritsch, Analysette 22 MicroTec Plus, two laser (532 nm, 940 nm) method, in accordance with ISO13320-1 and with the dry method at an air pressure 4 bar, with data conversion using the Fraunhofer method), in a range of from 2 to 8 pm, preferably 3 to 7 pm, more preferably from 3.5 to 5 pm, in particular from 4 to 4.5 µm.

### Calcined anthracite

According to the present invention, the required amount of flame retardant is reduced by using treated particles of calcined anthracite as athermanous filler. It is preferred that the calcined anthracite is gas calcined anthracite or electrically calcined anthracite, in particular gas calcined anthracite. Gas calcined anthracite is a relatively pure carbon material and has a high content of ash.

The ash composition of the calcined anthracite as used according to the present invention is specifically rich in silicon, aluminium and iron. The ash content is preferably up to 5%, more preferably below 0.5%, based on the weight of the calcined anthracite. Carbon content and ash are measured using a standard TGA method (thermogravimetric analysis based on ASTM D6370-99 in a temperature range of 20 to 1000°C and in an air atmosphere, with a heating rate of 10 K/min.).

The ash of a preferred type of anthracite is characterized by low contents of calcium, sodium and potassium. Typically, burning of anthracite coal results in the formation of ASTM class F fly ash which is classified as low calcium mineral waste. On the other hand, the ash in calcined anthracite contains significant amounts of silicon and aluminium. Preferably, the elemental composition of the ash is such that the ratio between aluminium and silicon element is about 0.5. The specific composition of ash in (gas) calcined anthracite improves the self-extinguishing of the vinyl aromatic polymeric foams. Thus, the treated particles of calcined anthracite, apart from improving thermal conductivity of the foam, preferably also improve self-extinguishing properties. This is because gas and electrically calcined anthracite have decreased volatile matter content (which would substantially deteriorate self-extinguishing of expanded vinyl aromatic foams). The volatile content is reduced in the calcination process.

Gas calcined anthracite as preferably used according to the present invention is produced from raw anthracite by calcination, typically in a vertical shaft furnace at a temperature in the range of from 1100 to 1300 °C, which results in a very homogeneous end product. In the calcination process, irregular carbon structures, or carbon based molecules, transform into more ordered carbon layers and exhibit graphitic-like structures.

The gas calcined anthracite preferably used according to the present invention preferably has a carbon content in the range of from 90 to 99 wt.%, more preferably from 95 to 99 wt.%, based on the weight of the calcined anthracite. The ash content is typically in the range of from 1 to 20 wt.%, based on the weight of the calcined anthracite, more preferably from 3 to 7 wt.%. The sulphur content is typically in the range of from 0.1 to 1.5 wt.%, more preferably from 0.2 to 1.0 wt.%, based on the weight of the calcined anthracite.

Electrically calcined anthracite as also preferably used according to the present invention is a carbonaceous material manufactured by heat treating high grade anthracite coal in an electrically "fired" calcining furnace. Anthracite is heated to temperatures in the range of from 1900 to 2200 °C, which results in some development of graphitic structure in the product.

Electrically calcined anthracite as preferably used according to the present invention typically has a carbon content in the range of from 90 to 99 wt.%, based on the weight of the calcined anthracite, more preferably from 95 to 99 wt.%. The ash content is in the range of from 1 to 20 wt.%, more preferably from 3 to 8 wt.%, based on the weight of the calcined anthracite.

The sulphur content of the calcined anthracite used according to the present invention is typically in a range of from 0.05 to 1.5 wt.%, more preferably from 0.1 to 0.8 wt.%, based on the weight of the calcined anthracite. The content of volatile parts is in the range of from 0.5 to 5.0 wt.%, more preferably from 1 to 3 wt.%, again based on the weight of the calcined anthracite.

Gas calcined anthracite (or electrically calcined anthracite), when used according to the present invention, is typically milled via pregrinding in a hammer mill or any useful impact mill resistant for abrasion. It is preferably preground to a d50 size of <500 pm, especially below 300 pm, and is then typically pulverized in a jet mill process, in order to obtain d50 average particle sizes in a range of from 2 to 8 pm, preferably 3 to 7 pm, more preferably from 3.5 to 5 pm, especially from 4 to 4.5 µm. Pregrinding to a d50 average particle size below 300 µm reduces abrasion in the subsequent jet milling process.

Preferred in terms of calcined anthracite is the use of anthracite derived from 1) green anthracite, 2) anthracite, 3) semi-anthracite and 4) meta-anthracite, each calcined in a gas or an electrical process.

The calcined anthracite is used in an amount of 10.1 wt.% to 25 wt.%, preferably from 11 wt.% to 20 wt.%, specifically from 12 wt.% to 15 wt.%, based on the weight of the foam, including all additives. In terms of the weight in the granulate, the amount is based on the weight of the granulate, including all additives, but exclusive of propellant.

### Agent selected from silanes and siloxanes

According to the invention, the particles of calcined anthracite as used for improving the thermal conductivity of vinyl aromatic polymer foams are treated with one or more agents selected from silanes and siloxanes having 1) one or more C₁- to C₃-alkoxy groups and 2) one or more C₁- to C₃₀-alkyl groups. Preferably, the silane or siloxane has 1) one or more C₁- to C₂-alkoxy groups and 2) one or more C₁- to C₂₀-alkyl groups.

The preferred agents are oligosiloxanes such as Dynasylan 9896 (Evonik), which is an oligomeric short-chain alkylfunctional siloxane. Dynasylan 9896 is an easy-to-handle additive and is preferred because of its low volatility, high boiling and low viscosity.

In all embodiments of the present invention, the total amount of agent is within a range of from 0.1 to 10 wt.%, based on the weight of the calcined anthracite. Advantageously, the total amount of agent is within a range of from 0.5 to 5.0 wt.%, based on the weight of the calcined anthracite, preferably within a range of from 0.8 to 2.5 wt.%, each based on the weight of the calcined anthracite.

Without wishing to be bound or restricted to a particular theory, it is believed that the agent, during mixing with the calcined anthracite, becomes bound onto the surface of calcined anthracite particles, namely chemically bound onto the inorganic (ash) constituents, by reaction with the one or more C₁- to C₃-alkoxy groups, under corresponding release of C₁- to C₃-alcohol. The silyl groups attached thereby on the surface of the particles disperse the particles better in the monomer during production of the polymer, and in the final polymer, presumably through the one or more C₁- to C₂₀-alkyl groups.

### Treatment

To improve dispersion of the particles of calcined anthracite in vinyl aromatic polymer, functionalization with one or more agents selected from silanes and siloxanes is effected in accordance with the present invention, to reduce the particle's hydrophilic properties. This treatment with agent selected from silanes and siloxanes will in the following also be referred to as silanization.

Silanization may for instance be performed by mixing in a vertical shaft mixer (single or twin shafts) or in any type of conical high speed mixer. In both types of silanization, the agent is sprayed onto the particles using high pressure nozzles. The disadvantage of such type of silanization process is that the mixer has to be heated to reach at least 70 to 80°C, to activate the transesterification reaction of alkoxy groups with OH groups on the (surface of the) particles of calcined anthracite. Also, forming alcohol has to be evaporated and caught in a condensation vessel. Another disadvantage is the high surface area of the particles and the required amount of agent, ranging from 0.1 to 10 wt.%, by weight of anthracite. In order to achieve proper wetting of the particles, it is preferred to dilute the agent in a solvent such as toluene or hexane. However, this requires additional equipment for evaporation and distillation of solvent.

Silanization can thus be performed by first spraying diluted agent (dissolved in solvent such as toluene) onto the pulverized calcined anthracite, under intensive mixing conditions, and later, or at the same time, exposing the mixture to a temperature treatment, typically in the range of 60 to 90°C, in order to react the agent with the (surface of the) anthracite particles and to evaporate the solvent. Such prepared pulverized anthracite is then ready for masterbatch preparation.

Thus, if the suspension process embodiment of the invention is used for the production of the expandable granulate, the particles of calcined anthracite can be treated with agent in a batch or continues manner, possibly integrated with the jet milling process used for obtaining the small particles. Milled calcined anthracite is transported to the continuous or batch heated mixer (preferably at a temperature of up to 90°C), in which the 30% solution of agent in solvent, such as toluene, is sprayed onto the powder. Heating leads to (chemical) coupling of the agent onto the (surface of the) particles of calcined anthracite and also removes substantial amount of solvent. After that, the treated powder can be transported to the extrusion line and dosed to the side extruder. Alternatively, the treated powder could be dosed without heat treatment, but then, the risk assessment for the installation would be more complicated because explosion-proof equipment and areas would be required.

Silanization may also be performed *in situ* via a compounding process and direct preparation of anthracite masterbatch. In this process, the agent is dosed continuously do the extruder. In can be injected under pressure or drop-wise to the hopper, where polymer is dosed. The intensive mixing including proper shearing provides good agent homogenization, while elevated temperature achieves a quick reaction of the agent with the particles. Due to the low dosing flow of agent, there is no need for solvent dilution. The alcohol forming from the reaction of the agent with the (surface of) the particles of calcined anthracite is evaporated in the vacuum degassing zone (most often the forming alcohol methanol or ethanol).

The extrusion process temperature is at an optimum in a range of from 170 to 180°C.

Consequently, silanization can be performed *in situ* during masterbatch preparation in the extruder, preferably a twin-screw extruder with good shearing and mixing specification of the screw. Silane can be dosed to the ready melt containing anthracite, or can be dosed continuously to the main hopper including dosing of calcined anthracite powder and the polymer. Alternatively, the anthracite could be dosed via the side feeding unit. However, silanization can also be performed by first spraying agent, diluted in solvent such as toluene, onto the pulverized calcined anthracite under intensive mixing conditions, and later, or at the same time, increasing the temperature to a range of from 60 to 90°C, to react the agent with the (surface of the) anthracite particles and to evaporate the solvent. Such prepared pulverized anthracite is then ready for masterbatch preparation.

It is preferred that silanization of gas calcined anthracite particles is performed during masterbatch production, wherein the agent is continuously dosed to the extruder. Such procedure obviates the need for additional mixing and silanization equipment, thereby reducing risk assessment connected with dust and dilution of silanization agent in flammable and vapour-forming solvents.

In case of the extrusion process embodiment of the invention, which can be performed in accordance with the teachings of WO2016/113332A and WO 2016/113321A, silanization can be effected in the extruder via three possibilities:
a) Direct injection of agent to the melt using a pressure pump, i.e. injection to the side extruder where calcined anthracite is compounded with a concentration of preferably 50 to 55%.
b) Peristaltic continuous addition of agent, drop-wise, to the main hopper of the side extruder, where anthracite powder and polymer are dosed.
c) Continuous spraying of agent, diluted in toluene (for instance as a 30% concentrated solution) into the continuous mixer from which such treated powder is transported directly to the dosing unit and finally the side extruder.

From the risk assessment point of view, direct injection of agent to the melt in the side extruder is preferred, more preferably in the melting shearing/mixing zones (where the particles of calcined anthracite are compounded with polymer).

All the above options to treat the particles of calcined anthracite with agent will, if done properly, give a similar effectiveness of silanization.

In a second aspect, the invention relates to a process for preparing a masterbatch of treated particles of calcined anthracite, the process comprising the mixing of:
1. particles of calcined anthracite,
2. vinyl aromatic polymer, and
3. one or more agents selected from silanes and siloxanes, wherein the silane or siloxane has 1) one or more C₁- to C₃-alkoxy groups and 2) one or more C₁- to C₃₀-alkyl groups,
wherein the total amount of agent is 0.1 to 10 wt.%, based on the weight of the calcined anthracite.

Preferably, the mixing is in the presence of non-polar aromatic solvent, preferably the non-polar aromatic solvent is toluene.

In a third aspect, the invention relates to a masterbatch comprising, based on the weight of the masterbatch,
a) 15 to 80 wt% of particles of calcined anthracite and
b) 84.5 to 19.5 wt.% of vinyl aromatic polymer,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite.

Preferably, the amount of calcined anthracite in the masterbatch is in a range of from 25 to 70 wt%, preferably from 35 to 65 wt%, more preferably from 40 to 60 wt%.

Preferably, the amount of vinyl aromatic polymer in the masterbatch is in a range of 74.5 to 29.5 wt%, preferably 64.5 to 34.5 wt%, more preferably 59.5 to 39.5 wt%.

Preferably, the vinyl aromatic polymer in the masterbatch is polystyrene, more preferably the polystyrene has a melt flow index (MFI) in the range of 1 to 40 g/10 min, determined by standard method based on EN ISO 1133:2005. Most preferably, the MFI is in a range of from 5 to 35, in particular the MFI is in a range of from 15 to 30.

The masterbatch further preferably comprises one or more lipophilic surfactants, to further improve the hydrophobicity of the treated particles of calcined anthracite. More preferably, the lipophilic surfactant is a nonionic surfactant, most preferably the nonionic surfactant has an HLB value in a range of from 0 to 10, in particular from 2 to 8. Typically, such surfactant could be a sorbitan ester, in particularly sorbitan monopalmitate or monostearate, or any having as R of alkyl group of a fatty acid preferably with C number of 11 (lauric acid) to 17 (stearic acid). The HLB value in this range decreases with increasing degree of esterification, giving improved hydrophobicity.

Another preferred group of surfactants are sulfosuccinates. Sulfosuccinates are a range of anionic surfactants and are monoalkyl and dialkyl (R) esters of sulfosuccinic acid. More preferably, the dialkyl esters could be used, such as diisobutyl sulfosuccinate, giving a pH in 10% aqueous solution of about 5 to 7.

In a fourth aspect, the invention relates to a process for the production of expandable vinyl aromatic polymer granulate comprising the steps:
i) providing at least one vinyl aromatic monomer in a reactor, and adding to the reactor
   i1) optional polymeric suspension aid,
   i2) particles of calcined anthracite,
   i3) one or more flame retardants,
ii) adding demineralised water to the reactor, and
   ii1) one or more inorganic acid salts as suspending agent(s),
   ii2) one or more peroxides as reaction initiator,
   ii3) one or more suspension stabilizers,
iii) continuing polymerization (preferably until the concentration of vinyl aromatic monomer(s) is below 1000 ppm by weight, based on the weight of the polymer),
iv) adding one or more blowing agents during or after polymerization in step iii), to form the granulate, and
v) cooling, and then separating the granulate from the aqueous phase,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite.

Preferably, the starting viscosity in step i) is higher than the monomer's viscosity and is in a range of from 20 to 60 mPa·s at a temperature of 20°C.

In the suspension process of the invention, the gas calcined or electrically calcined anthracite is preferably dosed to the ready suspension (but not exclusively).

The suspension process (with preferably 11 to 15 wt.% of gas calcined or electrically calcined anthracite, based on the total weight of resultant granulate, including all additives, but exclusive of propellant) is preferably performed in the following steps.
1. Addition of cold styrene to the pressure-resistant reactor, equipped with turbine mixing.
2. Addition of the masterbatch of treated particles of calcined anthracite, containing preferably from 40% to 60% of *in situ* silanized particles of calcined anthracite.
3. Dilution of masterbatch within half an hour, at a significant agitation speed.
4. Addition of cold demineralized water in a ratio to styrene of preferably 1.1 to 1.0, at a significantly reduced agitation speed, so as to not create an emulsion of water in styrene.
5. Addition of (preferably polymeric brominated) flame retardant, nucleating agent (polyethylene wax) and synergist.
6. Increasing of mixing speed, and creation of a suspension.
7. Heating of the suspension to 79°C and addition of peroxides, including low temperature cycle peroxide and high temperature cycle peroxide.
8. Heating to 82°C.
9. Addition of sodium chloride.
10. Polymerization over 15 minutes and addition of EPSolute stabilizer, which is a 30% concentrated submicron emulsion of tricalcium phosphate in water.
11. Continuing polymerization over 5 h in a low temperature cycle at about 82°C.
12. Increasing the temperature to 100°C in the presence of blowing agent dosing, or dosing of blowing agent after having reached a temperature of 100°C.
13. Further polymerization over 1 h at 100°C in the presence of blowing agent.
14. Increasing temperature to 125°C.
15. Polymerization over 1 to 3 h, at 125°C, in a high temperature cycle.
16. Cooling of the mass, down to 35°C or less.
17. Centrifugation of polymer particles from water, and addition of antistatic agent.
18. Drying of the particles in a fluid bed dryer.
19. Coating of the particles with a suitable mixture of zinc or magnesium stearate, glycerol monostearate and glycerol tristearate.

It is preferred that dilution of anthracite masterbatch is performed in cold styrene having ambient temperature, to avoid styrene vapours and thermal polymerization, thus formation of oligomers (especially styrene dimers, trimers), which would later reduce suspension stability. A dilution time of 30 min is optimal in order to form a homogenous solution of polymer and monomer with well-suspended calcined anthracite particles.

It is preferred to add masterbatch as much as concentrated. When for example 12 wt.% of calcined anthracite are to be added using a 50% concentrated masterbatch, 24% of masterbatch are added to the styrene monomer. With regard to the masterbatch, the content of ash in the calcined anthracite, the content of silane/siloxane agent, and/or the solvent content can be considered if desired, to adjust for the exact content of anthracite carbon in the final vinyl aromatic polymer foam. However, whenever reference is made to an amount or percentage "by weight of calcined anthracite", this is by total weight of calcined anthracite (including carbon, sulphur and mineral etc.).

It is preferred that the first peroxide, which is responsible for polymerization initiation in the lower temperature cycle at 82°C, is tert-butyl peroxy-2-ethylhexanoate. According to the present invention, it is possible to use any peroxide, preferably one which is active in a temperature range of from 70 to 100°C, including benzoyl peroxide. The first peroxide is preferably used in the range of concentration from 0.1 to 0.6 wt.%, preferably from 0.3 to 0.5 wt.%.

It is preferred that the second peroxide, which is responsible for polymerization initiation in the higher temperature cycle at 125°C, is tert-butylperoxy-(2-ethylhexyl) carbonate or tert-amylperoxy-(2-ethylhexyl) carbonate. According to the present invention, it is possible to use any peroxide which is suitably active at temperatures in a range of from 100 to 130°C. The second peroxide is preferably used in a concentration range of from 0.05 to 0.4 wt.%, preferably from 0.1 to 0.3 wt.%.

Additionally, dicumyl peroxide is preferably used as synergist for the polymeric brominated flame retardant. The synergist is used in a preferred concentration of from 0.5 to 1.5 wt.%.

Nucleating agent is used in a preferred range of 0.01 to 0.3 wt.%. Low molecular weight polyethylene wax having an average number molecular weight in the range of from 500 to 3000 g/mol and a polydispersity index from 1 to 4 (preferably to 3) can be used. However, it is also possible to use ethylene-propylene copolymers to regulate the cell size distribution.

According to the present invention, the low temperature cycle suspension polymerization step is preferably performed at a temperature in a range of from 75 to 95°C, preferably from 78 to 85°C. Depending on mixing speed and reactor construction as well content of first peroxide, it is preferred to polymerize under these temperature conditions for about 2 to 6 h, preferably from 4 to 5 h.

According to the present invention the high temperature cycle is preferably performed at a temperature in a range from 95 to 135°C, and it is performed in two steps. The first step is preferably performed at a temperature in a range from 95 to 110°C for about 0.5 to 3 h, preferably from 98 to 105°C for 1 to 2 h. The second step is preferably performed at a temperature in a range of from 110 to 135°C for 0.5 to 5 h, preferably from 115 to 130°C for 0.5 to 3 h.

According to the present invention, to improve cell size and its distribution, as well as to reduce formation of any imperfection in foamed structure homogeneity, a salt is added. Salts from the group of chlorides and sulphates, well soluble in water, are preferred. Preferably, the cheapest salts such as sodium chloride or calcium chloride could be used. It is preferred to add salt in two portions or at least one portion at the beginning of suspension polymerization process. The amount of the first portion is preferably in a range of from 0.1 to 4.9%, whilst the amount of the second portion is preferably in a range of 4.9 to 0.1%, and the total preferred concentration of salt in the water phase is below 5%.

According to the present invention, blowing agent is preferably added to the reactor after the first cycle is finished, or during the end of the first cycle. However, it is possible to add blowing agent also during or after the first step of the second temperature cycle, which also helps to increase the average molecular weight of the resultant polymer. Addition of blowing agent during or after the first step of the second cycle will create a much higher pressure in the reactor, thus such procedure is possible only with reactors prepared for operating pressures of more than 15 bar.

A preferred blowing agent is n-pentane, more preferred are its binary mixtures with isopentane, where the content of isopentane is in range from 5 to 50%, preferably from 10 to 30%.

It has been found in accordance with the suspension process aspect of the present invention that not only the addition of calcined anthracite as masterbatch and the process profile play a role, but also the stabilization system. It was surprisingly found that the addition of a submicron water emulsion of tricalcium phosphate alone, i.e. without the presence of ionic surfactant as Pickering system co-stabilizer, gives a stable suspension, with controllable average particle size and sufficient particle size distribution, additionally without formation of polymeric dust with size below 200 µm. Preferably, no ionic surfactant is used, and this avoids instability and formation of mentioned polymeric dust as well oversize particles (above 2.5 mm in diameter).

Therefore, it is preferred that the suspension stabilizer comprises an aqueous solution of calcium phosphate, more preferably, the suspension stabilizer does not comprise any of anionic surface active compounds and high molecular weight compounds, most preferably, the aqueous solution of calcium phosphate is an aqueous solution of tricalcium phosphate having a concentration within the range of from 15 to 45 wt.%, preferably within the range of from 20 to 40 wt.%.

Also, it is preferred that the aqueous solution of calcium phosphate contains the phosphate in a d50 particle size of less than 4 mm, more preferably less than 3 pm, in particular less than 2 µm.

Such submicron water emulsion of tricalcium phosphate is produced by Chemische Fabrik Budenheim KG (Budenheim, Germany) under the tradename *EPSolute Instant S.* It is a 30% concentrated emulsion containing Ca₅(PO₄)₃OH with an average (d50) particle size below 1.0 µm. A typical calcium content is 12%, and a typical phosphorous content is 5%.

According to the present invention, a water emulsion of tricalcium phosphate (preferably EPSolute) is preferably added to the reactor at the beginning of the suspension polymerization of expandable vinyl aromatic polymer, preferably polystyrene. The concentration may vary depending on the volume of the reactor, type of agitator, type of reactor, styrene-to-water ratio and required average particle size. A preferred concentration of water emulsion of tricalcium phosphate is in a range of from 0.01 to 0.5%, preferably 0.05 to 0.4%, more preferably 0.08 to 0.3%.

It was also found that the starting viscosity of the organic phase influences the stability of the suspension. The starting viscosity is related to the content of calcined anthracite in the organic phase and in the masterbatch, whilst the related amount of added masterbatch regulates the starting viscosity of organic phase. This viscosity is also in relation to the melt flow index parameter of vinyl aromatic polymer used for the preparation of the masterbatch of (treated) calcined anthracite.

According to the present invention, suitable suspension stability is achieved when the organic phase viscosity is in a range of 10 to 100 mPa·s, preferably from 20 to 80 mPa·s, more preferably from 20 to 60 mPa·s.

In a fifth aspect, the invention relates to a process for the production of expandable vinyl aromatic polymer granulate comprising the steps:
i) feeding a first polymer component comprising vinyl aromatic polymer into a first mixer;
ii) feeding a first additive component a) into the first mixer, to produce a first mixture from the first polymer component and the first additive component;
iii) feeding a second polymer component b) comprising vinyl aromatic polymer into a second mixer;
iv) feeding a second additive component b) into the second mixer, to produce a second mixture from the second polymer component and the second additive component, wherein the processing conditions in the second mixer are more severe than the processing conditions in the first mixer, by providing higher shear force;
v) combining the first and second mixtures, to produce a third mixture;
vi) injecting blowing agent c) into the third mixture, to produce a fourth mixture;
vii) mixing the fourth mixture; and
viii) pelletizing the fourth mixture, to obtain the granulate,

wherein the first additive component comprises a1) flame retardant,
wherein the second additive component comprises b1) particles of calcined anthracite, wherein the particles of calcined anthracite have been treated with one or more agents selected from silanes and siloxanes, wherein the silane or siloxane has 1) one or more C₁- to C₃-alkoxy groups and 2) one or more C₁-to C₃₀-alkyl groups, and wherein the amount of agent is 0.1 to 10 wt.%, based on the weight of the calcined anthracite.

In the extrusion process of the invention, the (preferably gas or electrically) calcined anthracite is first compounded in the side extruder and then dosed to the main extruder. The process allows for the separate addition of first and second additive components into a mixture that is ultimately charged with propellant and is pelletized, so as to obtain the expandable granulate. Because of the separate addition of the first and second additive components, the process according to the invention is highly flexible and allows for the processing of additives that have very different processing requirements, in particular in view of their stability under those processing conditions that are necessary so that the different additive components can best perform their desired function. Specifically, whereas the treated particles of calcined anthracite need to be well dispersed, the flame retardant is typically temperature-sensitive.

Also, whilst particles of gas calcined anthracite (GCA) may be used that have been treated with agent, agent addition may alternatively be to the main hopper of the side extruder, together with GCA powder and polymer.

According to the invention, the combining v) is preferably a feeding of the second mixture into the first mixer, to produce the third mixture. In this preferred embodiment, the production of the first mixture takes place upstream from the point of introduction of the second mixture into the first mixer.

Most preferably, the combining is in the first mixer, to produce the third mixture. Thus, in this most preferred embodiment, the second mixer is a side extruder that feeds the second mixture into the first mixer, wherein the second mixture is introduced into the first mixer downstream from the production of the first mixture, and the combined streams of first and second mixture continue in the first mixer, to produce the third mixture in the first mixer.

### The first mixer

Preferred conditions in the first mixer are:
i) a processing temperature in a range of from 100 to 250°C, preferably from 150 to 230°C, more preferably from 160 to 210°C, most preferably from 170 to 200°C; and
ii) a processing pressure in the range of from 30 to 100 bar, more preferably in the range of from 50 to 90 bar.

A preferred type of first mixer is a co-rotating twin-screw extruder. Particularly preferred is a 32D/40 mm type of extruder, equipped with a screw which possesses from 2 to 6 mixing elements in the last barrel zone. Other xD length dimensions and screw diameters are also possible.

### The second mixer

Preferred conditions in the second mixer are:
- a processing temperature in a range of from 100 to 250°C, preferably from 150 to 230°C, more preferably from 160 to 210°C;
- a processing pressure in a range of from 1 to 100 bar, preferably from 5 to 70 bar, more preferably from 10 to 50 bar;
- a screw speed so as to create the suitable shearing force; speed must be set up at a suitable level preferably ranging from 100 to 2000 rpm, more preferably from 500 to 1500, most preferably from 600 to 1200 rpm;
- in terms of shear rate: with the most preferred speed and the same kneading elements configuration, a suitable shear rate is generated in a range of from 1/5 s⁻¹ to 1/100 s⁻¹, preferably from 1/10 to 1/80 s⁻¹, more preferably from 1/20 to 1/60 s⁻¹.

In the compounding process in the second mixer, heat is generated by the shearing and can increase the melt temperature by about 10 to 70°C in the required processing zone. This effect is advantageous and favours the deagglomeration and disaggregation of the particles of calcined anthracite, and eventually the (grafting) reaction with the agent.

As the second mixer, a co-rotating twin screw extruder is preferred. It is in particular a 54D/25 mm extruder, equipped with screws designed to provide high shear forces. Other xD length dimensions and screw diameters are also possible.

In a preferred embodiment, in step vi), the injection is into the third mixture, the third mixture being a melt.

The vinyl aromatic polymer used in accordance with the invention is based on one (or more) vinyl aromatic monomer(s), preferably styrene, and optionally one or more comonomers, i.e. it is a homopolymer or a copolymer.

Preferably, the vinyl aromatic polymer or copolymer in the first and second copolymer components has an average number molecular weight in the range of from 40 to 150 kg/mol.

### The first polymer component

The first polymer component can be a vinyl aromatic polymer having a melt index from 4 to 20 g/10 min, as measured according to ISO 1133.

### The second polymer component

The second polymer component can be a vinyl aromatic homopolymer or preferably copolymer with p-tert butyl styrene or alpha-methyl styrene for increased glass transition (to improve insulation boards thermal stability), having a melt index ranging from 4 to 30 g/10 min, as measured according to ISO 1133.

### The first mixture

In addition to the first polymer component, the first mixture will ultimately comprise a first additive component a). First additive component a) preferably comprises one or more of
a1) nucleating agent,
a2) flame retardant, and
a3) synergist.

The various constituents of first additive component a) may be added at different locations into the first mixer, to give the first mixture. One or more of these constituents a1) to a3) may even be added downstream from the introduction of the second mixture. However, it is preferred that constituents a1) to a3), if present in the granulate, are all introduced prior to the introduction of the second mixture, in view of their generally more limited (thermal) stability, as compared to the constituents of second additive component b).

For instance, a flame retardant system may be present, which is usually a combination of two types of compounds, namely a2) a brominated aliphatic, cycloaliphatic, aromatic or polymeric compound containing at least 50 wt.% of bromine, and a second compound (so called synergistic compound, a3)) which can be bicumyl (i.e. 2,3-dimethyl-2,3-diphenylbutane) or 2-hydro-peroxy-2-methylpropane, or dicumyl peroxide, cumene hydroxide, or 3,4-dimethyl-3,4-diphenylbutane.

The total content of flame retardant system, i.e. a2) plus a3), is typically in a range of from 0.1 to 5.0 wt.% with respect to the total weight of vinyl aromatic polymer (inclusive of solid and, if any, liquid additives, but exclusive of propellant), preferably between 0.2 and 3 wt.%. The weight-to-weight ratio of bromine compound a2) to synergistic compound a3) is preferably in a range of from 1:1 to 15:1, usually in a range of from 3:1 to 10:1, in particular from 2:1 to 7:1.

### The second additive component b)

Preferably, the second additive component b) comprises calcined anthracite powder.

In a sixth aspect, the invention relates to an expandable vinyl aromatic polymer granulate comprising, based on the weight of the granulate (including all additives, but exclusive of propellant),
a) 10.1 to 25 wt% of particles of calcined anthracite, and
b) less than 0.8 wt.% of flame retardant,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite.

In the granulate, the amount of calcined anthracite is preferably in a range of from 10.3 to 21 wt.%, preferably from 10.5 to 17 wt.%, more preferably from 11 to 15 wt.%, based on the weight of the granulate, including all additives, but exclusive of propellant.

In the granulate, the amount of flame retardant component b) is preferably in a range of from 0.3 to 0.75 wt.%, preferably 0.4 to 0.7 wt.%, more preferably 0.5 to 0.65 wt.%, based on the weight of the granulate, including all additives, but exclusive of propellant.

In a seventh aspect, the invention relates to expanded vinyl aromatic polymer foam comprising, based on the weight of the foam (including additives),
a) 10.1 to 25 wt% particles of calcined anthracite, and
b) less than 0.8 wt.% of flame retardant,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite.

### Flame retardant

According to the present invention, the flame retardant used is preferably from the group of brominated flame retardants.

There are no strict limitations in terms of the type of molecule or macromolecule. Important is the content of active bromine, which content should typically be in range of 40 to 80 wt.%, based on the weight of the molecule or macromolecule. Also, the brominated flame retardant should during the contact of the polymer with the flame release the (active) bromine easily, which requires that the chemical structure of the molecule is chosen accordingly. Bromine is typically easily released from aliphatic positions.

According to the present invention, the required content of active bromine in the expandable vinyl aromatic polymer is low, and the (brominated) flame retardant is typically dosed in an amount of from 0.1 to 0.8%, preferably from 0.2 to 0.60%, based on the weight of the foam, including all additives. In relation to granulate, the amount is based on the amount of granulate, including all additives, but exclusive of propellant. In both the suspension and the extrusion process, the use of 0.5 to 0.65 wt.% of brominated flame retardant is sufficient, preferably polymeric brominated flame retardant which was recognized as a more environmentally friendly solution than hexabromocyclododecane (HBCD).

It is often considered more appropriate in the art to characterize the additives in granulate and foam with reference to the properties of the additives as initially used. Moreover, whenever reference is made in the present description of the invention to an amount of additive "by weight of vinyl aromatic polymer", this refers to the amount of the additive by weight of polymer component inclusive of (solid and, if any, liquid) additives, but exclusive of propellant.

Also, and without wishing to be bound or restricted to a particular theory, during the treating (silanization) of the particles of calcined anthracite in accordance with the invention, the one or more agents selected from silanes and siloxanes chemically react with the surface of the particles.

Treatment in accordance with the invention is preferably at a temperature above room temperature (25°C), and has the consequence that, from the treated particles, in particular the amount of agent used in the treatment cannot be directly determined, which is in particular the case for the masterbatch, the granulate and the final foam containing the treated particles. Therefore, the amount of agent used for the treatment is given in the description of the present invention with respect to the starting material in the treatment, as total amount of agent, based on the weight of the calcined anthracite. Also, the weight (and percentage) of calcined anthracite is given in the description of the present invention as not including the amount (and percentage) of agent, even when the treated particles are present in masterbatch, granulate or foam.

Unless indicated otherwise, all percentages are given by weight. The advantages of the present invention become more apparent from the following examples.

### Examples

### A. Attempted Repeat of US2015/0337101 A1

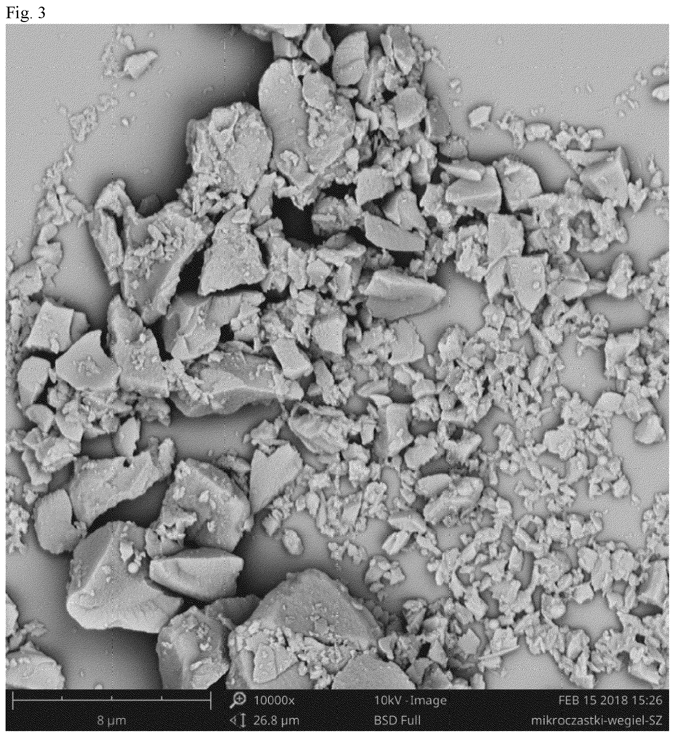

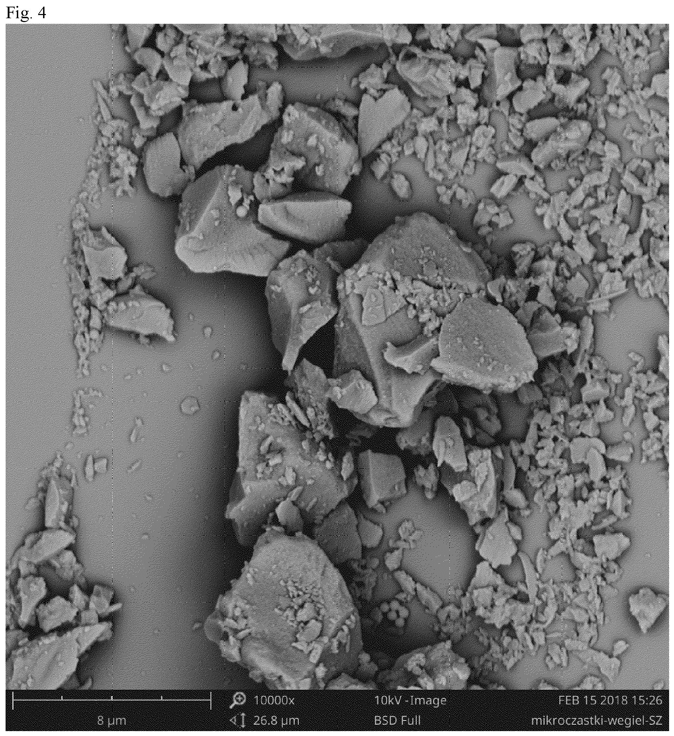

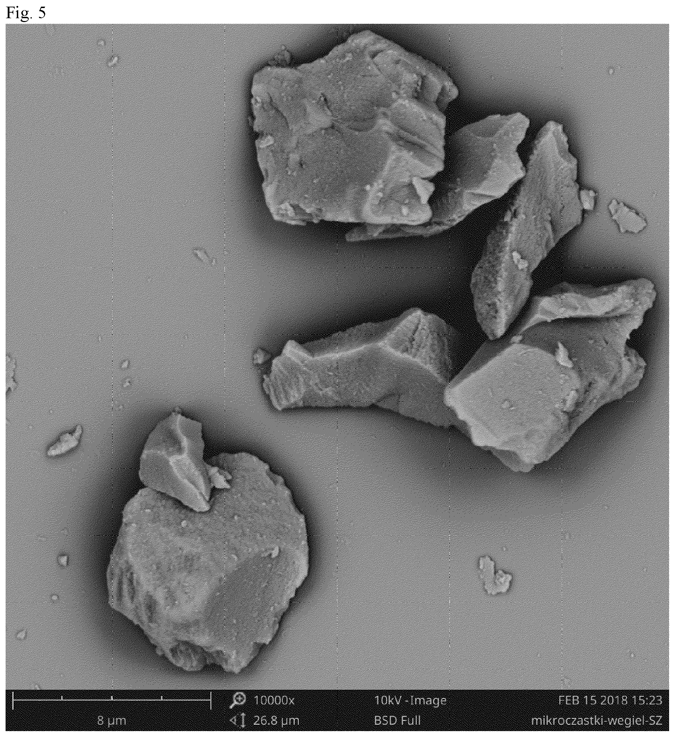

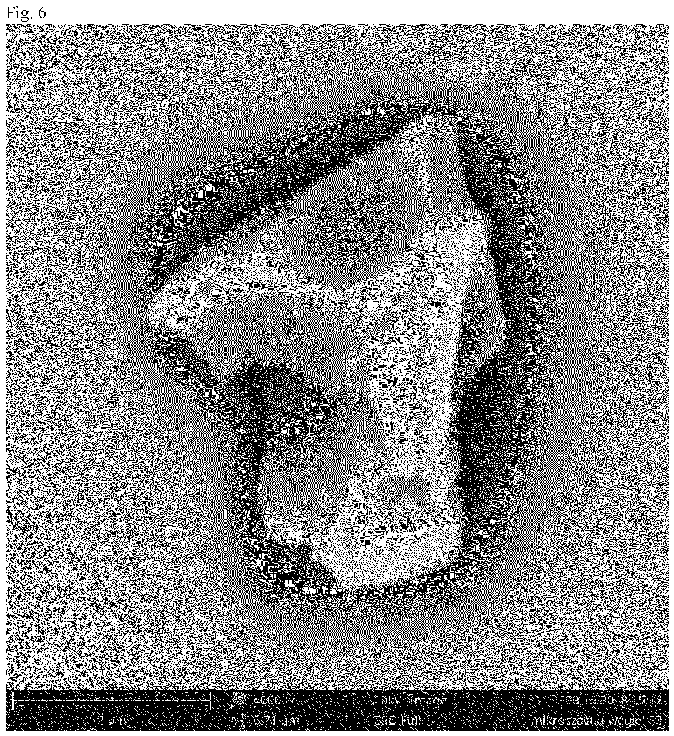

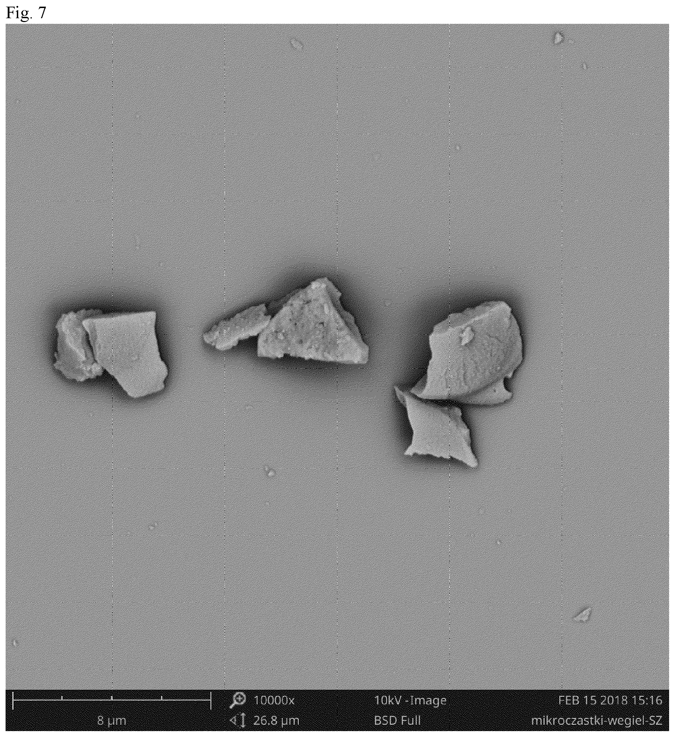

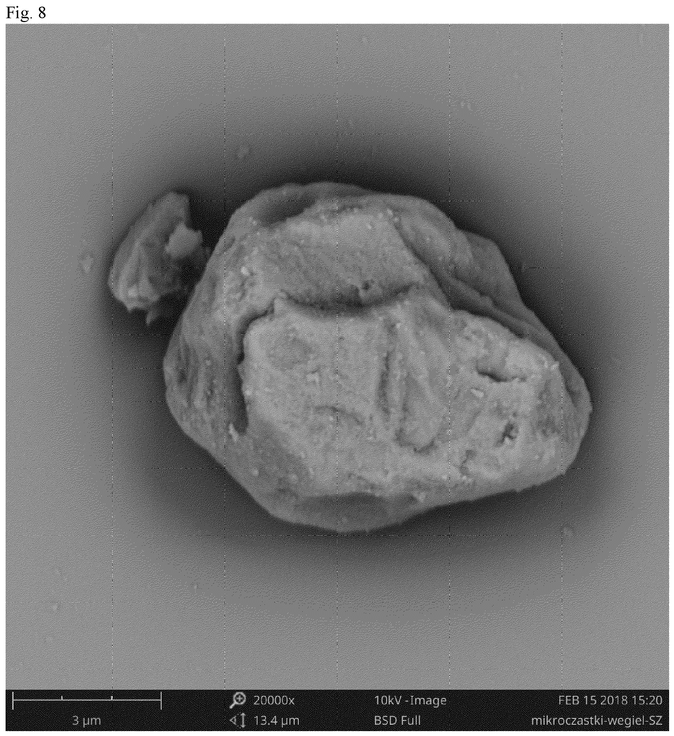

As mentioned above, anthracite particles cannot be ground efficiently, when following the teaching of US2015/0337101 A1. Milling of calcined anthracite with an opposed jet mill was found to not give particles having a platelet-like shape. In examination proceedings relating to EP 2 953 999 (EP counterpart of US2015/0337101 A1), it was suggested to use a spiral jet mill for grinding (but not an opposed jet mill). However, milling of calcined anthracite with a spiral jet mill will also not give particles having a platelet-like shape, as shown in the following experiments:
a. Gas-calcined anthracite (GCA) milling was performed using a *spiral jet mill,* model SJ15-CR/ER120 with an integrated classifier rotor. The GCA raw material used for the milling test had a fineness of 0-20 mm. Target average particle size D50 was chosen to be in a range of 4.4 to 4.6 pm, preferably 4.5 µm. This particle size was achieved by applying the following milling process parameters: classifier speed 7000 rpm, grinding air pressure 7.3 bar, air temperature (grinding hot gas) 118°C. Millability *in principle* was confirmed (however, dramatic abrasion of the classifier rotor occurred).
b. The resultant material had an average particle size D50 of 4.5 pm, measured using a CILAS 1064L apparatus (liquid method). The D50 result was confirmed using a Fritsch ANALYSETTE 22 MicroTec plus (liquid method), with a D50 result of 4.5 µm (average from four measurements).
c. The particles' shape was determined by taking scanning microscopy (SEM) images, using a Phenom PRO (10 kV) apparatus. For that reason, the GCA powder was sonicated for 5 minutes in water suspension and later carried in a spin-coater (3000 rpm) on a silicon wafer, previously soaked in acidic piranha 1:1 (H₂SO₄:H₂O₂). Then, the sample was sputtered with gold for 120 sec. in one cycle. This gave SEM images of excellent resolution. The SEM images are given in Annex B hereto (Fig. 3 to 58).
d. These SEM images show that anthracite coke particles milled using a spiral jet mill have an irregular rather than an oblong or platelet-like shape, which is a result similar to the one with the anthracite coke milled using an opposed jet mill.

Moreover, Example 2 of US2015/0337101 A1, relating to polymerization in suspension, cannot be repeated on the basis of the information in US2015/0337101 A1, in the absence of any teaching of for instance the moment of anthracite addition. Also, there is no teaching in US2015/0337101 A1 of peroxide concentration, of the type or amount of surfactant used, or of the reaction temperature, or the molecular weight of the polymer obtained.

### B. Comparative example

To a stainless steel reactor (equipped with turbine agitator and pentane dosing system), the styrene and subsequently the nucleating agent (0.1 wt.%), 1 wt.% of polymeric brominated flame retardant and 30% concentrated masterbatch of gas calcined anthracite (5.5 wt.% anthracite, d50 average particle size of 4.4 pm) and dissolved for 30 min at 70°C. Then, demineralized cold water (in a 2:1 volume ratio to the organic phase) was added and mixed continuously. The temperature was raised to 82°C, and peroxides were dosed as follows: *t*e*rt-*butyl 2-ethylperoxyhexanoate (0.3 wt.%), tert-butyl peroxy 2-ethylhexyl carbonate (0.1 wt.%) and dicumyl peroxide (0.8 wt.%). The reaction was continued for 6 h at this temperature. Then, the temperature was increased to 90°C. Suspension stability was reached after 0.5 h. Subsequently, the temperature was further increased to 120°C, and 5.5% of a mixture of pentane with isopentane (80/20%) was introduced into the reactor. The process was finished after 2 h at a temperature of 120°C and the mass was cooled down rapidly to 30°C. The polystyrene beads were removed from the reactor together with water. The beads were centrifuged and dried and were finally coated in a concentration of 0.35 wt.% by a mixture of magnesium stearate with glycerol monostearate and tristearate.

The coated beads were expanded and moulded, to measure thermal conductivity according to standard ISO 8301 (about 33.25 mW/m*K at a foam density of about 16 kg/m³).

### C. Suspension process

Calcined anthracite was used in accordance with the invention in an amount of 12.72 wt.% (Ex. 2), versus 6.36 wt.% (Ex. 1), of calcined anthracite in polymer, respectively. This shows that a calcined anthracite content above 10 wt.% is mandatory if one wants to achieve a thermal conductivity coefficient similar to the one typically achieved with 4 to 6 wt.% of graphite. Commercial types of graphite-based EPS were also purchased and analysed.

Also, the experiments in suspension (B and C) were performed using submicron-sized tricalcium phosphate in a 30% concentrated emulsion in water (so-called EPSolute) as the only suspension stabilizer.

Masterbatch 1 was prepared by mixing silanization of calcined anthracite powder, using the silanization agent Dynasylan 9896 as a 30% concentrated solution in toluene. Then, the particles of silanized anthracite were dried in an oven for 2h, to perform reaction (on the particle's surface) and to partially evaporate toluene, and were then compounded with polymer. Masterbatch 1 contains 53 parts by weight of calcined anthracite particles, 45 parts by weight of polymer, and 2 parts by weight Dynasylan 9896.

Masterbatch 2 was prepared by performing silanization with pure silanization agent *in situ* (by injection into the extruder). Masterbatch 2 was prepared from the amounts of calcined anthracite, polymer and silanization agent described for Masterbatch 1, except that the Dynasylan 9896 was used as a pure substance (instead of as a solution in toluene). Masterbatch 3 was prepared according to the procedure described above for Masterbatch No. 1, but without drying. Masterbatch 4 was prepared *in situ,* but with injection of a 30% concentrated solution of silanization agent in toluene.

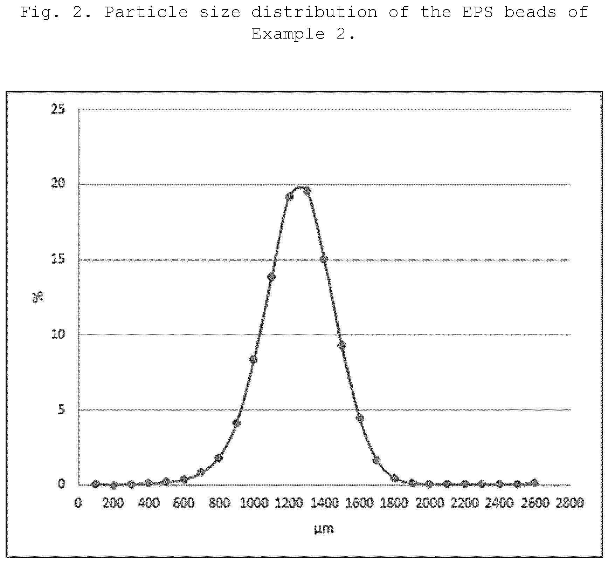

The following list shows the particle size distribution of the granulate that was achieved in Ex. 2, with an average particle size of 1.3 mm (the data is also shown in Fig. 2):

| µm | % | | µm | % | | µm | % |
|---|---|---|---|---|---|---|---|
| 100 | 0.088 | | 1000 | 8.336 | | 1900 | 0.13 |
| 200 | 0.014 | | 1100 | 13.871 | | 2000 | 0.053 |
| 300 | 0.036 | | 1200 | 19.214 | | 2100 | 0.034 |
| 400 | 0.102 | | 1300 | 19.585 | | 2200 | 0.035 |
| 500 | 0.183 | | 1400 | 15.081 | | 2300 | 0.034 |
| 600 | 0.361 | | 1500 | 9.304 | | 2400 | 0.032 |
| 700 | 0.83 | | 1600 | 4.463 | | 2500 | 0.034 |
| 800 | 1.841 | | 1700 | 1.659 | | 2600 | 0.104 |
| 900 | 4.106 | | 1800 | 0.47 | | | |

### D. Extrusion process

Extrusion is advantageous to achieve good dispersion, and was performed to show the influence of the content of calcined anthracite on the thermal conductivity and self-extinguishing of foams. Calcined anthracite (not silanized) was only dosed to the process, since the setup could perform *in situ* compounding. The positive influence of silanization on the mechanical properties was also noticed.

In both the suspension and the extrusion processes, a mixture of n-pentane and isopentane (80/20) was used as the blowing agent, in a concentration of about 5.5 wt%. In both types of processes (experiments C, D), Dynasylan 9896 was used for silanization of the calcined anthracite.

For foam preparation, only the beads with a particle size in the range of from 0.8 to 1.6 mm were used, and were coated with a mixture of zinc stearate and glycerol mono- and tristearate. The following properties of the final foams were measured:
- Thermal conductivity according to standard ISO 8301,
- Mechanical properties (compressive and bending strength) according to standard EN 13163,
- Self-extinguishing tests according to EN ISO 11925-2 and DIN 4102 B2, and
- Polymer dust content using a Camsizer P4 (Retsch).

**Table 1. Suspension Examples 1 to 9 (MB = masterbatch no.)**

| **Component** | **Ex. 1** | **Ex. 2** | **Ex. 3** | **Ex. 4** | **Ex. 5** | **Ex. 6** | **Ex. 7** | **Ex. 8** | **Ex. 9** |
|---|---|---|---|---|---|---|---|---|---|
| GCA powder* | | | | 6% ^{b, d} | 12% ^{b} | | | | |
| GCA (MB1)^{a} | 12%^{b} (6.36)^{d} | 24%^{b} (12.72) | 24%^{c} (12.72) | | | 24%^{b} (12.72) | 24%^{b} (12.72) | 24%^{b} (12.72) | 24%^{b} (12.72) |
| Emerald 3000* | 0.65% | 0.65% | 0.65% | 0.65% | 0.65% | 0.65% | 0.65% | 0.60% | 0.5% |
| Polywax 1000* | 0.1% | 0.1% | 0.1% | 0.1% | 0.1% | 0.1% | 0.1% | 0.1% | 0.1% |
| DCP* | 1.2% | 1.2% | 1.2% | 1.2% | 1.2% | 1.2% | 1.2% | 1.2% | 1.2% |
| DVB* | 0.002% | 0.002% | 0.002% | 0.002% | 0.002% | 0.002% | 0.002% | 0.002% | 0.002% |
| TAPEHC* | 0.2% | 0.2% | 0.2% | 0.2% | 0.2% | 0.2% | 0.2% | 0.2% | 0.2% |
| Peroxan PO* | 0.41% | 0.41% | 0.41 | 0.41 | 0.41 | 0.41 | 0.41 | 0.41 | 0.41 |
| NaCl*** | | | | | | | | | |
| beginning | 0.5% | 0.5% | 0.5% | 0.5% | 0.5% | 0.5% | 0.5% | 0.5% | 0.5% |
| end | 4.0% | 4.0% | 4.0% | 4.0% | 4.0% | 4.0% | 4.0% | 4.0% | 4.0% |
| EPSolute* | 0.08% | 0.12% | 0.12% | 0.08% | 0.12% | 0.12% | 0.12% | 0.12% | 0.12% |
| SDS* | | | | | | 10 ppm | | | |
| ABS* | | | | | | | 10 ppm | | |
| TCP* added after stability is reached | 0.01% | 0.01% | 0.01% | 0.01% | 0.01% | 0.01% | 0.01% | 0.01% | 0.01% |
| Spolostan 4P* added after stability is reached | 0.001% | 0.001% | 0.001% | 0.001% | 0.001% | 0.001% | 0.001% | 0.001% | 0.001% |

| | | | | | | | | | |
|---|---|---|---|---|---|---|---|---|---|
| * amount of anthracite per total organic phase. ** amount per styrene monomer. *** amount per water. ^{a} amount of masterbatch (in brackets: amount of anthracite), each per final granulate including additives, but exclusive of propellant. ^{b} silanized anthracite was used. ^{c} nonsilanized anthracite was used, comparative. ^{d} comparative. | | | | | | | | | |

**Table 2. Suspension Examples 10 to 12.**

| **Component** | **Ex. 10** | **Ex. 11** | **Ex. 12** |
|---|---|---|---|
| GCA (MB 2) ^{a} | 24% of silanized (12.72) | | |
| GCA (MB 3) ^{a} | | 24% of silanized (12.72) | |
| GCA (MB 4) ^{a} | | | 24% of silanized (12.72) |
| Emerald 3000* | 0.65% | 0.65% | 0.65% |
| Polywax 1000* | 0.1% | 0.1% | 0.1% |
| DCP * | 1.2% | 1.2% | 1.2% |
| TAPEHC * | 0.2% | 0.2% | 0.2% |
| Peroxan PO * | 0.41% | 0.41% | 0.41 |
| NaCl *** beginning / end | 0.5% / 4.0% | 0.5% / 4.0% | 0.5% / 4.0% |
| EPSolute * | 0.08% | 0.12% | 0.12% |
| SDS * | | | |
| ABS * | | | |
| TCP * added after stability is reached | 0.01% | 0.01% | 0.01% |
| Spolostan 4P * added after stability is reached | 0.001% | 0.001% | 0.001% |

| | | | |
|---|---|---|---|
| * amount per total organic phase. ** amount per styrene monomer. *** amount per water. ^{a} amount of masterbatch (in brackets: amount of anthracite), each per final granulate including additives, but exclusive of propellant. | | | |

**Table 3. Extrusion Examples 13 to 16.**

| **Component** | **Ex. 13** | **Ex. 14** | **Ex. 15⁴** | **Ex. 16⁴** |
|---|---|---|---|---|
| Polystyrene with MFI 8 g/10 min. | Yes | Yes | Yes | Yes |
| ¹GCA silanized (prepared by spraying a 30% solution of silanization agent onto the powder in a continuous mixer, and dosing to the side extruder) | 12% of anthracite² | | | |
| ¹GCA silanized in situ (silane added to the main hopper of the side extruder together with polymer and GCA powder) | | 12%² | | |
| GCA non-silanized | | | 12% of anthracite² | 6% of anthracite³ |
| Emerald 3000 (per polymer) | 0.5% | 0.5% | 0.5% | 0.5% |
| Polywax 2000 (per polymer) | 0.3% | 0.3% | 0.3% | 0.3% |
| Bicumyl (per polymer) | 0.1% | 0.1% | 0.1% | 0.1% |

| | | | | |
|---|---|---|---|---|
| ²In both examples (13 and 14), 1 wt% of Dynasylan per weight of calcined anthracite were used. ² In these examples (13 to 15), the amount of anthracite was 12 wt.%, per final granulate including additives, but exclusive of propellant. ³ In example 16, the amount of anthracite was 6 wt.%, per final granulate including additives, but exclusive of propellant ⁴ Comparative. | | | | |

### Example 1 (comparative)

To a cold stainless steel, pressure resistant pilot reactor (total volume V = 600 L) were introduced, as follows:
1. styrene monomer, in an amount of 204.30 kg,
2. masterbatch (53% concentrated) with gas calcined anthracite, and silanized - 28.68 kg,
3. 30 min of intensive mixing was applied,
4. The agitation speed was reduced, and 260 kg of demineralized water were added,
5. then, the following ingredients were dosed: Polywax 1000 - 0.239 kg, Emerald 3000 - 1.55 kg, dicumyl peroxide (DCP) - 2.87 kg, divinyl benzene (DVB) - 0.0053 kg,
6. the agitation speed was increased and the melt heated to 82°C,
7. at 79°C, the following peroxides were incorporated: Peroxan PO (tert-butyl peroxy-2-ethylhexanoate) - 0.91 kg and TAPEHC (tert-amylperoxy 2-ethylhexyl carbonate) - 0.48 kg,
8. 15 min after having reached 82°C, 0.637 kg of EPSolute and 1.3 kg of NaCl were added,
9. the suspension was kept for 340 min at a temperature of 82°C, until stability was reached (judged by that the polymeric beads are polymerized enough so that do not stick together and are heavier than water),
10. then, the standard tricalcium phosphate was added in an amount of 0.2 kg, together with ionic surfactant - Spolostan 4P - 0.0024 kg, NaCl was also added - 10.4 kg,
11. the reactor was closed and the blowing agent was added - 14.0 kg,
12. subsequently, the temperature was increased to 100°C and the suspension was kept for 1 h under these conditions,
13. then, the temperature was increased to 125°C and the suspension was kept at this temperature for 2 h, and
14. finally, the suspension was cooled down to 35°C or less, removed from the reactor, centrifuged and the beads dried with a fluid bed dryer, to reach a water content of 0.15%.

### Example 2

This experiment followed the procedure described above for Example 1, but instead of 12% of masterbatch, 24% was added to styrene (57.36 kg) and the EPSolute concentration was increased to 0.12% - 0.956 kg. This example is comparable with Example 1 and shows the difference in the thermal conductivity coefficient.

### Example 3 (comparative)

In Example 3, a 53% concentrated masterbatch with non-silanized anthracite was used, to show the influence of lack of treatment according to the invention on suspension stability and thermal conductivity of the final foam. To reach the long lasting suspension stability without the presence of silanization agent, a different suspending sequence had to be done, namely the dosing of water was reversed: At first, the water was added to the reactor with suspending agent, and later the ready organic phase (masterbatch diluted in styrene) was introduced to the water phase. The ingredient concentrations and further procedure were the same as in Example 2.

### Example 4 (comparative)

This example is similar to Comparative Example 1 and shows that adding calcined anthracite in the form of a masterbatch (as in Comparative Example 1) is beneficial for a better (lower) thermal conductivity coefficient, which corresponds to the better dispersion of anthracite particles in the polymer. It is also beneficial for suspension stability if the starting viscosity of the organic phase melt is higher than the monomer viscosity and is in a range of about 20 to 60 mPa·s versus styrene viscosity of 0.76 at a temperature of 20°C. In this case, additional portions of EPSolute had to be added to stabilize the suspension.

### Example 5

This example is comparable to Examples 4 and 2, again showing that an even higher content of calcined anthracite in the polymer cannot improve thermal conductivity very much without having improved dispersion via compounding it with the polymer. Again, it is also beneficial for suspension stability if the starting viscosity of the organic phase melt is higher than the monomer viscosity and it is in a range of about 20 to 60 mPa·s versus styrene viscosity of 0.76 at a temperature of 20°C. In this case, additional portions of EPSolute had to be added to stabilize the suspension.

### Example 6 and 7

These examples were performed to show that, under the preferred conditions and when a high content of hydrophilic calcined anthracite mineral is implemented, the use of additional ionic surfactants (which is known from Pickering stabilization systems) is not beneficial to obtain suspension which is free from polymer dust with average particles size of below 200 µm. Therefore, such surfactants are eliminated to overcome this problem. Such procedure is also very beneficial from a production cost and environmental point of view, as a high content of dust (so-called *off grades*) would otherwise increase production cost. Waste would also be produced as a result of waste water treatment processes, which waste would have to be incinerated later. The use of only EPSolute in the process of the invention eliminates these problems, und such procedure is surprisingly different from using conventional Pickering systems.

### Example 8 and 9

These examples were performed to show that an optimum concentration of brominated polymeric flame retardant in the production by suspension polymerization is 0.65%. In order to meet the stated DIN and EN self-extinguishing standards, a content of even below 0.6% was possible, namely in extrusion processes, where self-extinguishing standards were met using as little as 0.5% of brominated polymeric flame retardant.

### Examples 10, 11 and 12

These examples were performed with the use of (50% concentrated) masterbatch of calcined anthracite, which masterbatch was however prepared in the different process procedures 2, 3 and 4. The comparison shows how the preparation of the masterbatch may influence final foam properties.

### Example 13

In this example, material was prepared on a 100 kg/h tandem line having side, main and cooling extruders, following the extrusion process taught in WO2016/113332A and WO 2016/113321A. Material was silanized in a continuous process using a 30% concentred solution of silanization agent in toluene. In the extrusion process, only 0.5% of brominated polymeric flame retardant was used. The concentration of calcined anthracite in the side extruder was 50%. Flame retardant, bicumyl and nucleating agent were dosed as they are to the main extruder. The pentane mixture was injected at the end of the main extruder.

### Example 14

This example follows example 13, but instead of using particles of gas calcined anthracite (GCA) that have been treated with silane, there was silane addition to the main hopper of the side extruder, together with GCA powder and the polymer.

### Examples 15 and 16 (comparative)

These examples show, in an extrusion process, the influence of the addition of 12 and 6 wt.% of non-silanized anthracite on the final foam properties, mainly in terms of thermal conductivity and mechanical properties.

### Results

**Table 4. Expanded foam composite parameters at about 15.0 kg/m³.**

| Examples | 1* | 2 | 3* | 4 * | 5 | 6 | 7 | 8 | 9 | 10 |
|---|---|---|---|---|---|---|---|---|---|---|
| Thermal conductivity (mW/m·K) | 33.1 | 30.7 | 31.3 | 33.4 | 31.0 | 30.8 | 30.6 | 30.7 | 30.7 | 31.0 |
| Flammability (EN ISO 11925-2) | + | + | + | + | + | + | + | + | - | + |
| Flammability (DIN 4102 B2) | + | + | + | + | + | + | + | - | - | + |
| Compressive strength at 10% def. (kPa) | 75 | 70 | 60 | 65 | 68 | 71 | 69 | 72 | 73 | 67 |
| Bending strength (kPa) | 150 | 145 | 130 | 136 | 143 | 142 | 141 | 146 | 147 | 140 |
| Polymer dust content (<200 pm) (%) | 0.10 | 0.10 | 0.29 | 1.97 | 2.96 | 14.80 | 7.64 | 0.10 | 0.10 | 0.20 |

| | | | | | | | | | | |
|---|---|---|---|---|---|---|---|---|---|---|
| (+) Passed; (-) Not passed. * Comparative. | | | | | | | | | | |

**Table 5. Expanded foam composite parameters at about 15.0 kg/m³.**

| Examples | 11 | 12 | 13 | 14 | 15* | 16* | EPS¹ | EPS² |
|---|---|---|---|---|---|---|---|---|
| Thermal conductivity (mW/m·K) | 30.8 | 30.6 | 30.6 | 30.7 | 30.9 | 33.0 | 31.2 | 30.4 |
| Flammability (EN ISO 11925-2) | + | + | + | + | + | + | + | + |
| Flammability (DIN 4102 B2) | + | + | + | + | + | + | + | + |
| Compressive strength at 10% def. (kPa) | 70 | 71 | 70 | 71 | 58 | 73 | 74 | 71 |
| Bending strength (kPa) | 143 | 145 | 144 | 143 | 127 | 149 | 160 | 160 |
| Polymer dust content (<200 pm) (%) | 0.10 | 0.10 | 0.00 | 0.00 | 0.00 | 0.00 | 0.00 | 0.00 |

| | | | | | | | | |
|---|---|---|---|---|---|---|---|---|
| (+) Passed, * Comparative, EPS¹ - comparative, commercial EPS with (according to analysis) 4.5% of graphite, EPS² - comparative, commercial EPS with (according to analysis) 6% of graphite. | | | | | | | | |

The following paragraphs relate to preferred embodiments of the invention:
1. Use of particles of calcined anthracite, the particles having been treated with one or more agents selected from silanes and siloxanes, and the silane or siloxane having 1) one or more C₁- to C₃-alkoxy groups and 2) one or more C₁- to C₃₀-alkyl groups,
   in the production of vinyl aromatic polymer foam, for decreasing the thermal conductivity of the foam, as measured according to ISO 8301 AMD 1:2010-08,
   the foam comprising, based on the weight of the foam (including all additives), 10.1 to 25 wt% of the calcined anthracite,
   wherein the total amount of agent is in a range of from 0.1 to 10 wt.%, based on the weight of the calcined anthracite.
2. The use according to paragraph 1, wherein the particles of calcined anthracite have a d₅₀ particle size, as determined by laser diffraction, in a range of from 2 to 8 pm, preferably 3 to 7 pm, more preferably from 3.5 to 5 pm, in particular from 4 to 4.5 µm.
3. The use according to paragraph 1 or paragraph 2, wherein the calcined anthracite is gas calcined anthracite or electrically calcined anthracite.
4. The use of any of the preceding paragraphs, wherein the silane or siloxane has 1) one or more C₁- to C₂-alkoxy groups and 2) one or more C₁- to C₂₀-alkyl groups.
5. The use according to any of the preceding paragraphs, wherein the total amount of agent is within a range of from 0.5 to 5.0 wt.%, preferably within a range of from 0.8 to 2.5 wt.%, each based on the weight of the calcined anthracite.
6.A process for preparing a masterbatch of treated particles of calcined anthracite, the process comprising the mixing of:
   a) particles of calcined anthracite,
   b) vinyl aromatic polymer, and
   c) one or more agents selected from silanes and siloxanes, wherein the silane or siloxane has 1) one or more C₁-to C₃-alkoxy groups and 2) one or more C₁- to C₃₀-alkyl groups,
   wherein the total amount of agent is 0.1 to 10 wt.%, based on the weight of the calcined anthracite.
7. The process according to paragraph 6, wherein the mixing is in the presence of non-polar aromatic solvent,
   preferably wherein the non-polar aromatic solvent is toluene.
8.A masterbatch comprising, based on the weight of the masterbatch,
   a) 15 to 80 wt% of particles of calcined anthracite and
   b) 84.5 to 19.5 wt.% of vinyl aromatic polymer,
   wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite.
9. The masterbatch according to paragraph 8, wherein the amount of calcined anthracite is in a range of from 25 to 70 wt%, preferably from 35 to 65 wt%, more preferably from 40 to 60 wt%.
10. The masterbatch according to paragraph 6 or 7, wherein the amount of vinyl aromatic polymer is in a range of 74.5 to 29.5 wt%, preferably 64.5 to 34.5 wt%, more preferably 59.5 to 39.5 wt%.
11. The masterbatch according to any of paragraphs 8 to 10, wherein the vinyl aromatic polymer is polystyrene,
   preferably wherein the polystyrene has a melt flow index (MFI) in the range of 1 to 40 g/10 min,
   preferably wherein the MFI is in a range of from 5 to 35, in particular wherein the MFI is in a range of from 15 to 30.
12. A process for the production of expandable vinyl aromatic polymer granulate comprising the steps:
   i) providing at least one vinyl aromatic monomer in a reactor, and adding to the reactor
      i1) optional polymeric suspension aid,
      i2) particles of calcined anthracite,
      i3) one or more flame retardants,
   ii) adding demineralised water to the reactor, and
      ii1) one or more inorganic acid salts as suspending agent(s),
      ii2) one or more peroxides as reaction initiator,
      ii3) one or more suspension stabilizers,
   iii) continuing polymerization (preferably until the concentration of vinyl aromatic monomer(s) is below 1000 ppm by weight, based on the weight of the polymer),
   iv) adding one or more blowing agents during or after polymerization in step iii), to form the granulate, and v) cooling, and then separating the granulate from the aqueous phase,

   wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite,
   preferably wherein the starting viscosity in step i) is higher than the monomer's viscosity and is in a range of from 10 to 100 mPa·s at a temperature of 20°C.
13. The process of paragraph 12, wherein the suspension stabilizer comprises an aqueous solution of calcium phosphate,
   preferably wherein the suspension stabilizer does not comprise any of anionic surface active compounds and high molecular weight compounds,
   more preferably wherein the aqueous solution of calcium phosphate is an aqueous solution of tricalcium phosphate having a concentration within the range of from 15 to 45 wt.%, preferably within the range of from 20 to 40 wt.%.
14. A process for the production of expandable vinyl aromatic polymer granulate comprising the steps:
   i) feeding a first polymer component comprising vinyl aromatic polymer into a first mixer;
   ii) feeding a first additive component a) into the first mixer, to produce a first mixture from the first polymer component and the first additive component;
   iii) feeding a second polymer component b) comprising vinyl aromatic polymer into a second mixer;
   iv) feeding a second additive component b) into the second mixer, to produce a second mixture from the second polymer component and the second additive component, wherein the processing conditions in the second mixer are more severe than the processing conditions in the first mixer, by providing higher shear force;
   v) combining the first and second mixtures, to produce a third mixture;
   vi) injecting blowing agent c) into the third mixture, to produce a fourth mixture;
   vii) mixing the fourth mixture; and
   viii) pelletizing the fourth mixture, to obtain the granulate,

   wherein the first additive component comprises a1) flame retardant,
   wherein the second additive component comprises b1) particles of calcined anthracite, wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the amount of agent is 0.1 to 10 wt.%, based on the weight of the calcined anthracite.
15. An expandable vinyl aromatic polymer granulate comprising, based on the weight of the granulate (including all additives, but exclusive of propellant),
   a) 10.1 to 25 wt% of particles of calcined anthracite, and
   b) less than 0.8 wt.% of flame retardant,
   wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite.
16. The expandable vinyl aromatic polymer granulate according to paragraph 15, wherein the amount of calcined anthracite is in a range of from 10.3 to 21 wt.%, preferably from 10.5 to 17 wt.%, more preferably from 11 to 15 wt.%.
17. The expandable vinyl aromatic polymer granulate according to paragraph 15 or paragraph 16, wherein the amount of flame retardant component b) is in a range of from 0.3 to 0.75 wt.%., preferably 0.4 to 0.7 wt.%., more preferably 0.5 to 0.65 wt.%.,
18. The expandable vinyl aromatic polymer granulate according to any of paragraphs 15 to 17, wherein the flame retardant is a polymeric brominated flame retardant.
19. An expanded vinyl aromatic polymer foam comprising, based on the weight of the foam (including additives),
   a) 10.1 to 25 wt% particles of calcined anthracite, and
   b) less than 0.8 wt.% of flame retardant,
   wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite.

## Claims

1. A process for preparing a masterbatch of treated particles of calcined anthracite, the process comprising the mixing of:
a) particles of calcined anthracite,
b) vinyl aromatic polymer, and
c) one or more agents selected from silanes and siloxanes, wherein the silane or siloxane has 1) one or more C₁-to C₃-alkoxy groups and 2) one or more C₁- to C₃₀-alkyl groups,
wherein the total amount of agent is 0.1 to 10 wt.%, based on the weight of the calcined anthracite.

2. The process according to claim 1, wherein the mixing is in the presence of non-polar aromatic solvent,
preferably wherein the non-polar aromatic solvent is toluene.

3. A masterbatch comprising, based on the weight of the masterbatch,
a) 15 to 80 wt% of particles of calcined anthracite and
b) 84.5 to 19.5 wt.% of vinyl aromatic polymer,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite.

4. The masterbatch according to claim 3, wherein the amount of calcined anthracite is in a range of from 25 to 70 wt%, preferably from 35 to 65 wt%, more preferably from 40 to 60 wt%.

5. The masterbatch according to claim 3 or 4, wherein the amount of vinyl aromatic polymer is in a range of 74.5 to 29.5 wt%, preferably 64.5 to 34.5 wt%, more preferably 59.5 to 39.5 wt%.

6. The masterbatch according to any of claims 3 to 5, wherein the vinyl aromatic polymer is polystyrene,
preferably wherein the polystyrene has a melt flow index (MFI) in the range of 1 to 40 g/10 min,
preferably wherein the MFI is in a range of from 5 to 35, in particular wherein the MFI is in a range of from 15 to 30.

7. Use of particles of calcined anthracite, the particles having been treated with one or more agents selected from silanes and siloxanes, and the silane or siloxane having 1) one or more C₁- to C₃-alkoxy groups and 2) one or more C₁- to C₃₀-alkyl groups,
in the production of vinyl aromatic polymer foam, for decreasing the thermal conductivity of the foam, as measured according to ISO 8301 AMD 1:2010-08,
the foam comprising, based on the weight of the foam (including all additives), 10.1 to 25 wt% of the calcined anthracite,
wherein the total amount of agent is in a range of from 0.1 to 10 wt.%, based on the weight of the calcined anthracite.

8. The use according to claim 7, wherein the particles of calcined anthracite have a d₅₀ particle size, as determined by laser diffraction, in a range of from 2 to 8 pm, preferably 3 to 7 pm, more preferably from 3.5 to 5 pm, in particular from 4 to 4.5 µm.

9. The use according to claim 7 or claim 8, wherein the calcined anthracite is gas calcined anthracite or electrically calcined anthracite.

10. The use of any of claims 7 to 9, wherein the silane or siloxane has 1) one or more C₁- to C₂-alkoxy groups and 2) one or more C₁- to C₂₀-alkyl groups.

11. The use according to any of claims 7 to 10, wherein the total amount of agent is within a range of from 0.5 to 5.0 wt.%, preferably within a range of from 0.8 to 2.5 wt.%, each based on the weight of the calcined anthracite.

12. A process for the production of expandable vinyl aromatic polymer granulate comprising the steps:
i) providing at least one vinyl aromatic monomer in a reactor, and adding to the reactor
i1) optional polymeric suspension aid,
i2) particles of calcined anthracite,
i3) one or more flame retardants,
ii) adding demineralised water to the reactor, and
ii1) one or more inorganic acid salts as suspending agent(s),
ii2) one or more peroxides as reaction initiator,
ii3) one or more suspension stabilizers,
iii) continuing polymerization (preferably until the concentration of vinyl aromatic monomer(s) is below 1000 ppm by weight, based on the weight of the polymer),
iv) adding one or more blowing agents during or after polymerization in step iii), to form the granulate, and
v) cooling, and then separating the granulate from the aqueous phase,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the total amount of agent is 0.1 to 10 wt.%, based on the weight of the calcined anthracite,
preferably wherein the starting viscosity in step i) is higher than the monomer's viscosity and is in a range of from 10 to 100 mPa·s at a temperature of 20°C.

13. The process of claim 12, wherein the suspension stabilizer comprises an aqueous solution of calcium phosphate,
preferably wherein the suspension stabilizer does not comprise any of anionic surface active compounds and high molecular weight compounds,
more preferably wherein the aqueous solution of calcium phosphate is an aqueous solution of tricalcium phosphate having a concentration within the range of from 15 to 45 wt.%, preferably within the range of from 20 to 40 wt.%.

14. A process for the production of expandable vinyl aromatic polymer granulate comprising the steps:
ix) feeding a first polymer component comprising vinyl aromatic polymer into a first mixer;
x) feeding a first additive component a) into the first mixer, to produce a first mixture from the first polymer component and the first additive component;
xi) feeding a second polymer component b) comprising vinyl aromatic polymer into a second mixer;
xii) feeding a second additive component b) into the second mixer, to produce a second mixture from the second polymer component and the second additive component, wherein the processing conditions in the second mixer are more severe than the processing conditions in the first mixer, by providing higher shear force;
xiii) combining the first and second mixtures, to produce a third mixture;
xiv) injecting blowing agent c) into the third mixture, to produce a fourth mixture;
xv) mixing the fourth mixture; and
xvi) pelletizing the fourth mixture, to obtain the granulate,
wherein the first additive component comprises a1) flame retardant,
wherein the second additive component comprises b1) particles of calcined anthracite, wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl groups, and wherein the amount of agent is 0.1 to 10 wt.%, based on the weight of the calcined anthracite.

15. An expandable vinyl aromatic polymer granulate comprising, based on the weight of the granulate (including all additives, but exclusive of propellant),
a) 10.1 to 25 wt% of particles of calcined anthracite, and
b) flame retardant,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite.

16. The expandable vinyl aromatic polymer granulate according to claim 15, wherein the amount of calcined anthracite is in a range of from 10.3 to 21 wt.%, preferably from 10.5 to 17 wt.%, more preferably from 11 to 15 wt.%.

17. The expandable vinyl aromatic polymer granulate according to claim 15 or claim 16, wherein the amount of flame retardant component b) is less than 0.8 wt.%, preferably in a range of from 0.3 to 0.75 wt.%., more preferably 0.4 to 0.7 wt.%., most preferably 0.5 to 0.65 wt.%.,

18. The expandable vinyl aromatic polymer granulate according to any of claims 15 to 17, wherein the flame retardant is a polymeric brominated flame retardant.

19. An expanded vinyl aromatic polymer foam comprising, based on the weight of the foam (including additives),
a) 10.1 to 25 wt% particles of calcined anthracite, and
b) flame retardant,
wherein the particles of calcined anthracite have been treated with one or more agents selected from silanes and siloxanes, wherein the silane or siloxane has 1) one or more C₁- to C₃-alkoxy groups and 2) one or more C₁- to C₃₀-alkyl, and wherein the amount of agent is 0.1 to 10 wt.%, based on the weight of the calcined anthracite,
preferably wherein the amount of b) flame retardant is less than 0.8 wt.% of.
